# DEMANDE DE BREVET EUROPEEN

(11) **EP 0 901 936 A1**
(43) Date de publication de la demande: **17.03.1999**
(21) Numéro de dépôt: 98440170.3
(22) Date de dépôt: 04.08.1998
(51) Int. Cl.: B60Q 1/076

(54) **Dispositif de commande manuelle pour le réglage des phares de véhicules automobiles**

(30) Priorité: 11.09.1997 FR 9711460
(71) Demandeur: EATON S.A.M., MC-98000 Monaco (MC)
(72) Inventeur: Corbier, Jean-Paul, 06240 Beausoleil (FR)
(74) Mandataire: Littolff, Denis

(57) **Abrégé**

Dispositif de commande manuelle pour le réglage du faisceau des phares de véhicules automobiles, comportant des moyens de réglage manuels (3) accessibles par l'utilisateur lorsqu'il est en position de conduite, établissant une correspondance entre le positionnement desdits moyens de réglage et des valeurs discrètes de charge supposée du véhicule nécessitant un ajustement correspondant du faisceau des phares, lequel est réalisé au moyen d'actionneurs pilotés par un circuit électronique de traitement auquel sont également reliés lesdits moyens de réglage manuels (3), la consigne de réglage du faisceau des phares spécifiée par l'utilisateur via lesdits moyens de réglage (3) étant transmise en écho, au moyen d'un circuit électronique (10), à un système d'affichage graphique (5) permettant le contrôle visuel instantané de la consigne fournie,
caractérisé en ce que lesdits moyens de réglage manuels (3) sont à actions identiques répétitives, fonctionnant selon au moins une séquence en boucle, dépourvus de graduations, et permettent de fournir une consigne (13) correspondant à des charges et à une répartition desdites charges variables.

## Description

La présente invention concerne un dispositif de commande manuelle pour le réglage du faisceau des phares de véhicules automobiles, c'est à dire en réalité des optiques desdits phares contenant la source de lumière et l'orientant par rapport à la route.

Dans la plupart des véhicules en circulation, le réglage des phares s'effectue directement au niveau des optiques, à l'avant du véhicule et les conducteurs se contentant de réviser plus ou moins régulièrement un positionnement moyen à vide, sans procéder à aucun ajustement lorsque la charge du véhicule varie.

Pourtant, lorsqu'il est chargé, un véhicule voit son assiette modifiée, et par conséquent également le trajet du faisceau des phares. Plus généralement, chaque modification de charge entraîne mécaniquement une variation de trajectoire des faisceaux lumineux. A pleine charge, un véhicule préréglé pour une orientation moyenne à vide verra ses faisceaux dirigés d'une manière exagérée vers le haut, ce qui conduira à éblouir les conducteurs de véhicules roulant en sens inverse.

Le réglage du positionnement de l'optique des phares a donc une incidence essentielle sur la sécurité routière. La tendance actuelle chez les constructeurs s'oriente vers l'installations de systèmes simplifiant la tâche des conducteurs, en permettant notamment la réalisation des réglages à partir de l'habitacle du véhicule, sans devoir ouvrir le capot comme auparavant.

Ainsi, il existe des systèmes accessibles sur le tableau de bord des véhicules, comportant un bouton de commande gradué autorisant quelques réglages discrets supposés correspondre à des valeurs de charges prévues à l'avance. Ce bouton entraîne un potentiomètre ou équivalent, qui transforme la consigne introduite par l'utilisateur en un signal utilisable par un organe qui déplace l'optique des phares, par exemple un moteur à courant continu ou un moteur pas à pas.

Selon d'autres systèmes fonctionnellement identiques, le potentiomètre est remplacé par des balais glissant sur des pistes de circuits imprimés, ces balais commutant des résistances fixes formant diviseur de tension entre le pôle positif de l'alimentation et la masse. Dans cette variante, il s'agit en fait d'un potentiomètre à points de réglage fixes.

Le problème a également déjà été résolu par l'emploi de circuits électroniques plus complexes, associés aux boutons de commande précités, lesdits circuits envoyant un signal numérique à l'adresse des composants destinés à mouvoir les optiques des phares. Ces solutions sont cependant plus onéreuses que les précédentes, et par conséquent moins utilisées par les constructeurs de véhicules automobiles.

Le point commun aux configurations précédentes réside dans le bouton de commande, qui est un bouton rotatif affleurant le tableau de bord, gravé de chiffres ou de signes gradués, ou portant un curseur qui se positionne en face d'un chiffre ou signe d'une graduation fixe.

Le point de départ, lorsque le bouton est en butée inférieure, correspond par exemple à un réglage du faisceau vers le bas, destiné aux cas où le véhicule est très chargé. Chaque incrémentation correspond à un relèvement du faisceau des phares, qui culmine en butée supérieure, lorsque la charge est minimale, c'est à dire lorsque le conducteur est seul dans son véhicule. L'inverse, en terme de positionnement du bouton, est également possible.

Ces boutons rotatifs gradués comportent plusieurs inconvénients :
- Le mouvement rotatif implique une certaine attention de la part de l'utilisateur. Toute attention requise par le maniement d'éléments du tableau de bord se traduit toutefois par un préjudice, même faible, en terme de sécurité.
- L'utilisation n'est pas intuitive : la graduation portée par les boutons obéit à une convention choisie par le concepteur qui n'est pas transparente à l'utilisateur. Sans avoir lu le mode d'emploi, le nouvel utilisateur ne peut pas savoir si la butée inférieure correspond à la position basse du faisceau ou l'inverse.
- Il n'est pas facile pour un conducteur de se rendre compte que son réglage de hauteur des faisceaux n'est pas adapté à la charge, et provoque un éblouissement des véhicules venant en sens inverse.

Il existe enfin des systèmes entièrement automatiques, dans lesquels des capteurs mesurent la hauteur du véhicule à l'avant et à l'arrière, un organe de traitement calculant ensuite la position à donner aux optiques des phares pour ajuster la hauteur des faisceaux. Ce type de système est cependant également très onéreux, et par conséquent pas installable sur tout type de véhicule.

La présente invention remédie aux inconvénients précités, en proposant un dispositif facile à utiliser, intuitif, et dont le coût de production reste très modéré. Le conducteur du véhicule peut régler la hauteur du faisceau des phares de son véhicule d'une manière extrêmement simple, en contrôlant le réglage demandé pour éviter tout mauvais réglage induisant un danger potentiel par éblouissement des autres conducteurs.

Il s'agit d'un dispositif de commande manuelle pour le réglage du faisceau des phares de véhicules automobiles, comportant des moyens de réglage manuels accessibles par l'utilisateur lorsqu'il est en position de conduite, établissant une correspondance entre le positionnement desdits moyens de réglage et des valeurs discrètes de charge supposée du véhicule nécessitant un ajustement correspondant du faisceau des phares, lequel est réalisé au moyen d'actionneurs pilotés par un circuit électronique de traitement auquel sont également reliés lesdits moyens de réglage manuels, qui est caractérisé en ce que la consigne de réglage du faisceau des phares spécifiée par l'utilisateur via lesdits moyens de réglage est transmise en écho, au moyen d'un circuit électronique, à un système d'affichage graphique permettant le contrôle visuel instantané de la consigne fournie.

Il y a là un confort certain pour l'utilisateur, qui sait en temps réel le choix opéré et peut procéder à toute modification si la sélection de la charge et de sa répartition est erronée.

En effet, la commande, réalisée par des moyens de réglage manuel à actions identiques répétitives, fonctionnant selon au moins une séquence en boucle, et par conséquent dépourvus de graduations, permet en outre d'obtenir une consigne correspondant à des charges et à une répartition desdites charges variables.

Ces moyens de réglage participent également au confort et à la sécurité, puisqu'ils sont d'un maniement qui n'exige pratiquement aucune attention de la part de l'utilisateur, mais seulement une manoeuvre répétitive simplifiée à l'extrême.

De préférence, lesdits moyens de réglage manuels des faisceaux des phares comportent un ou deux boutons poussoirs, fonctionnant respectivement en une boucle simple ou deux boucles inversées, et coopèrent avec un circuit de comptage du nombre de pressions effectuées par l'utilisateur sur le ou les boutons poussoirs.

Il suffit par conséquent de répéter la pression pour modifier le réglage, jusqu'à atteindre le choix proposé par la visualisation sur le système graphique. Ce geste quasi automatique ne nécessite qu'une attention minimale, et la commande peut être opérée à tout moment sans causer de problèmes particuliers.

Plus précisément, le système d'affichage visuel permettant le contrôle visuel instantané de la consigne fournie comporte des émetteurs de lumières éclairant un pictogramme schématisant le véhicule vu de dessus, disposés aux endroits de distribution de la charge, et commandés par le circuit électronique de traitement en fonction de la consigne donnée via les moyens de réglage manuels.

De la sorte, l'utilisateur sait instantanément quel réglage a été sélectionné au moyen du ou des boutons poussoirs, sans aucun risque d'erreur. Ce système global est très intuitif à mettre en oeuvre, la combinaison boutons poussoirs / pictogramme rétroéclairé étant au surplus particulièrement conviviale pour l'utilisateur.

De préférence, les émetteurs de lumière sont des diodes électroluminescentes dont l'allumage et l'extinction sont commandés par ledit circuit électronique de traitement, lesdites diodes rétroéclairant le pictogramme représentant le véhicule.

Le circuit électronique de traitement comprend un microcontrôleur traitant les signaux provenant des moyens de réglage manuel, et envoyant des signaux d'une part vers les actionneurs pilotant les optiques des phares, et d'autre part vers le système d'affichage graphique.

Ce microcontrôleur peut être intégré en un composant unique, soudé sur un circuit imprimé comportant par ailleurs les sources de lumières et les entrées/sorties respectivement recevant les données du ou des boutons poussoirs et envoyant les données vers les actionneurs.

Selon une configuration préférentielle, l'ensemble est ensuite assemblé dans un boîtier unique dont la face visible par l'utilisateur est réalisée en matériau translucide permettant le rétroéclairage du pictogramme qui y est dessiné.

Ledit boîtier est alors facilement intégrable, par le constructeur du véhicule, dans un tableau de bord à proximité de l'utilisateur.

L'invention va à présent être décrite d'une manière plus détaillée, en référence aux dessins annexés, pour lesquels :
- La figure 1 est un schéma simplifié d'une première réalisation possible de l'invention ;
- La figure 2 représente une variante de cette première configuration ;
- Les figures 3a et 3e illustrent le fonctionnement tel qu'il est visualisé par l'utilisateur ; et
- La figure 4 montre un schéma électrique simplifié du circuit électronique.

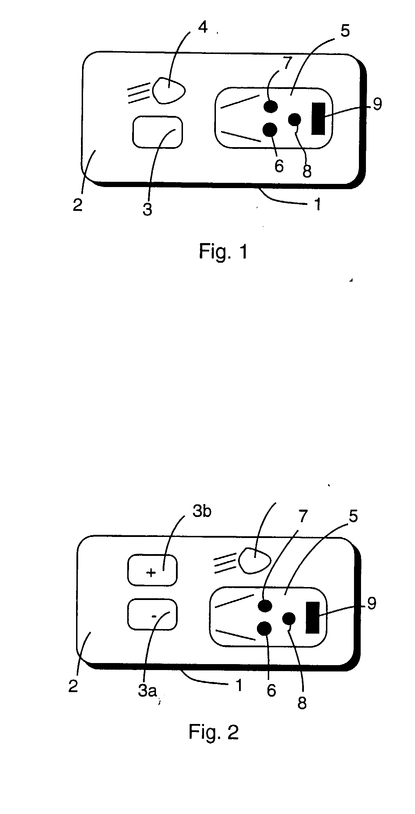

La figure 1 représente en fait principalement la face (2) du boîtier (1) que voit le conducteur, c'est à dire celle qui est en principe intégrée dans ou à proximité du tableau de bord. L'ensemble du dispositif étant assemblé dans ce boîtier (1) unique, ce dernier est schématisé avec un effet de relief.

La face (2) visible comporte un bouton poussoir (3), un graphisme (4) explicatif de la fonction du boîtier (1), et un pictogramme (5) reflétant le choix opéré par l'utilisateur.

Ledit pictogramme (5) comporte des zones (6 à 9) illuminables indépendamment les unes des autres et localisant les zones de charge dans le véhicule schématisé en vue de dessus.

Ainsi, la zone (6) représente le siège conducteur, la zone (7) est le siège avant passager, la zone (8) représente l'occupation des sièges arrières et la zone (9) schématise le coffre à bagages.

Dans la configuration de la figure 2, l'unique bouton poussoir (3) est remplacé par deux boutons poussoirs (3a, 3b). Le premier (3) fonctionne uniquement en boucle, alors que les seconds (3a, 3b), bien que fonctionnant selon des séquences en boucle inversées, sont vus comme ayant un rôle complémentaire : le bouton (3a) décrémente, alors que le bouton (3b) incrémente.

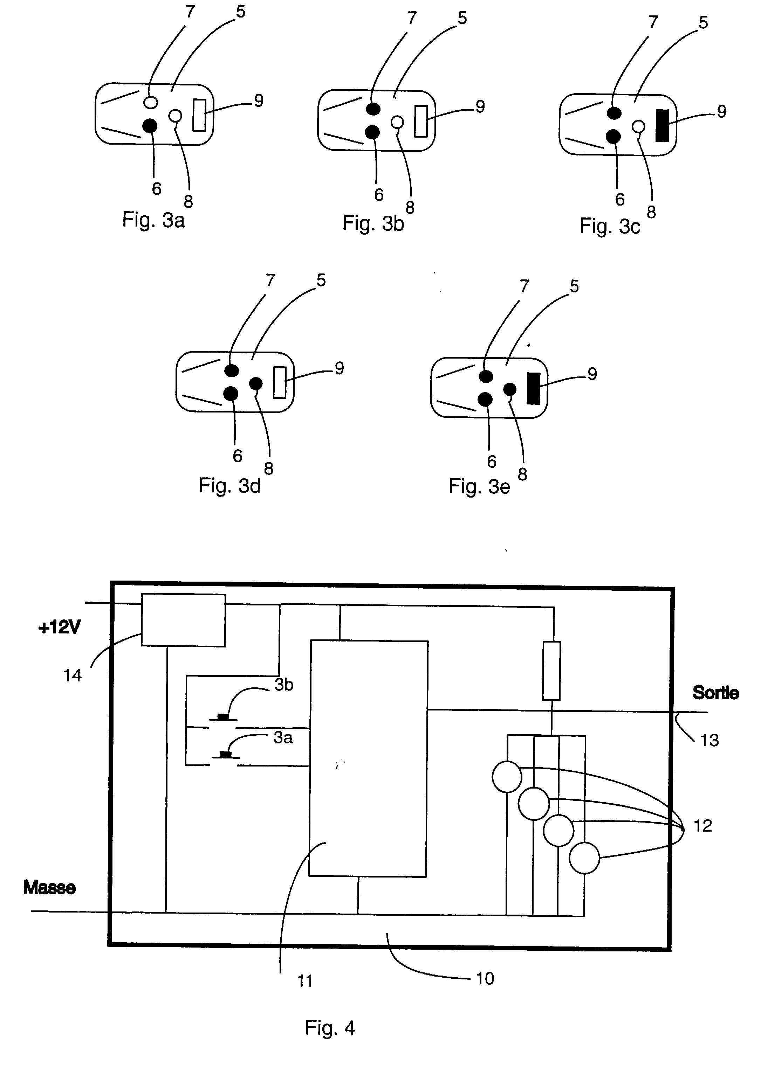

Dans les deux cas, chaque pression a pour but de modifier la sélection et la répartition des charges, ainsi que cela est représenté en figures 3a à 3e.

Pour la version de la figure 1, le bouton poussoir (3) fonctionne en boucle fermée, c'est à dire qu'il passe en revue tous les réglages apparaissant dans les figures 3a à 3e, successivement, et revient dans la configuration de la figure 3a après celle de la figure 3e.

Pour passer de la configuration 3d à la configuration 3b, par exemple, il convient ainsi d'exercer trois pressions successives. Pour passer de 3c à 3d, il faut appuyer à quatre reprises sur le bouton (3).

La version de la figure 2, comportant deux boutons poussoirs (3a, 3b), n'entraîne pas cette contrainte, car l'un des boutons (3b) incrémente, passant successivement d'une configuration à l'autre, alors que l'autre (3a) décrémente, revenant en arrière d'une configuration à chaque pression.

Les configurations proposées sont ici au nombre de cinq, selon que la charge est :
a) sur le siège conducteur ;
b) sur les deux sièges avant ;
c) sur les deux sièges avant et dans le coffre ;
d) sur les sièges de l'habitacle ; et
e) maximale.

Le fonctionnement détaillé sera expliqué ci-après.

Dans chaque cas sélectionné, le circuit de traitement (représenté en figure 4) envoie, parallèlement aux signaux d'allumage des sources lumineuses, des signaux répondant à la configuration choisie à l'adresse des actionneurs déplaçant les optiques des phares.

Le circuit de traitement (10) est articulé autour du microcontrôleur (11), recevant la consigne de l'utilisateur via les boutons poussoirs (3a, 3b), et envoyant le signal de consigne sous une forme adéquate en sortie (13), à l'adresse desdits actionneurs (non représentés). Ce signal est également transmis, sous une forme appropriée, aux émetteurs de lumière (12), par exemple des diodes, placés aux endroits adéquats sous le pictogramme schématisant le véhicule.

Ces diodes (12) sont représentées au nombre de quatre pour correspondre aux configurations montrées aux figures précédentes.

Ce circuit (10) de traitement est alimenté via la tension continue du véhicule (+ 12V), ladite tension étant abaissée et régulée au moyen d'un circuit de protection et de régulation (14) qui ramène la tension à une valeur compatible avec la tension d'alimentation des composants.

La figure 3 représente un exemple des différentes configurations que l'utilisateur peut choisir, car elles sont gérées par le microcontrôleur (11). Dans le cas représenté, il y a cinq états de charge différents, chaque pression sur le bouton poussoir (non représenté sur cette figure) passant d'un état au suivant.

Le comptage se faisant de manière tournante, la séquence, avec cinq états de charge, différents se présentera de la manière suivante : 1, 2, 3, 4, 5, 1, 2, 3, etc. correspondant respectivement aux figures 3a à 3e.

Pour chaque charge, le circuit électronique (10) se réfère à une table interne qui décrit l'état correspondant des sources de lumières. Cette table se présente sous une forme du type :

| Etat de charge | Source de lumière 6 | Source de lumière 7 | Source de lumière 8 | Source de lumière 9 |
|---|---|---|---|---|
| 1 (3a) | 1 | 0 | 0 | 0 |
| 2 (3b) | 1 | 1 | 0 | 0 |
| 3 (3c) | 1 | 1 | 0 | 1 |
| 4 (3d) | 1 | 1 | 1 | 0 |
| 5 (3e) | 1 | 1 | 1 | 1 |

A la lumière de ce tableau, il apparaît clairement que l'utilisateur est poussé à ne pas oublier d'effectuer le réglage à chaque changement d'état de charge, car il constate de visu si son réglage est adapté ou non à la charge réelle du véhicule.

Pour chaque état de charge sélectionné, le circuit électronique (10) se réfère à une autre table, et envoie vers les actionneurs (non représentés) le signal de consigne (13) assurant le positionnement de l'optique des phares.

Cette table est établie pour chaque type de véhicule, en tenant compte de sa géométrie et de la raideur de ses ressorts de suspension. Un exemple en est donné ci-après :

| | |
|---|---|
| Etat 1 | 1,0 V |
| Etat 2 | 2,0 V |
| Etat 3 | 2,4 V |
| Etat 4 | 3,8 V |
| Etat 5 | 4,5 V |

Une simple programmation du circuit électronique au moment de sa conception permet de modifier les deux tables précédentes à volonté.

La description précédente s'applique à un exemple préférentiel, mais est bien entendu généralisable à des variantes, pourvu que ces dernières entrent dans le cadre des revendications annexées.

## Revendications

1. Dispositif de commande manuelle pour le réglage du faisceau des phares de véhicules automobiles, comportant des moyens de réglage manuels (3) accessibles par l'utilisateur lorsqu'il est en position de conduite, établissant une correspondance entre le positionnement desdits moyens de réglage et des valeurs discrètes de charge supposée du véhicule nécessitant un ajustement correspondant du faisceau des phares, lequel est réalisé au moyen d'actionneurs pilotés par un circuit électronique de traitement auquel sont également reliés lesdits moyens de réglage manuels (3), la consigne de réglage du faisceau des phares spécifiée par l'utilisateur via lesdits moyens de réglage (3) étant transmise en écho, au moyen d'un circuit électronique (10), à un système d'affichage graphique (5) permettant le contrôle visuel instantané de la consigne fournie,
caractérisé en ce que lesdits moyens de réglage manuels (3) sont à actions identiques répétitives, fonctionnant selon au moins une séquence en boucle, dépourvus de graduations, et permettent de fournir une consigne (13) correspondant à des charges et à une répartition desdites charges variables.

2. Dispositif de commande manuelle pour le réglage du faisceau des phares de véhicules automobiles selon la revendication précédente, caractérisé en ce que lesdits moyens de réglage manuels (3) des faisceaux des phares comportent un (3) ou deux (3a, 3b) boutons poussoirs, fonctionnant respectivement en une boucle simple ou deux boucles inversées, qui coopérent avec un circuit de comptage du nombre de pressions effectuées par l'utilisateur sur le ou les boutons poussoirs.

3. Dispositif de commande manuelle pour le réglage du faisceau des phares de véhicules automobiles selon l'une quelconque des revendications précédentes, caractérisé en ce que le système d'affichage graphique permettant le contrôle visuel instantané de la consigne fournie comporte des émetteurs de lumières (6, 7, 8, 9) éclairant un pictogramme (5) schématisant le véhicule vu de dessus, disposés aux endroits de distribution de la charge, et commandés par le circuit électronique de traitement (10) en fonction de la consigne donnée via les moyens de réglage manuels (3).

4. Dispositif de commande manuelle pour le réglage du faisceau des phares de véhicules automobiles selon la revendication précédente, caractérisé en ce que les émetteurs de lumière (6, 7, 8, 9) sont des diodes électroluminescentes dont l'allumage et l'extinction sont commandés par ledit circuit électronique de traitement (10), lesdites diodes rétroéclairant le pictogramme schématisant le véhicule.

5. Dispositif de commande manuelle pour le réglage du faisceau des phares de véhicules automobiles selon l'une quelconque des revendications précédentes, caractérisé en ce que le circuit électronique de traitement (10) comprend un micro contrôleur (11) traitant les signaux provenant des moyens de réglage manuel (3, 3a, 3b), et envoyant des signaux (13) d'une part vers les actionneurs pilotant les optiques des phares, et d'autre part vers le système d'affichage graphique (5).

6. Dispositif de commande manuelle pour le réglage du faisceau des phares de véhicules automobiles selon l'une quelconque des revendications précédentes, caractérisé en ce qu'il est assemblé dans un boîtier unique (1) dont la face visible (2) par l'utilisateur est réalisée en matériau translucide permettant le rétroéclairage du pictogramme (5) qui y est dessiné.
